# EUROPEAN PATENT SPECIFICATION

(11) **EP 1 718 886 B1**
(45) Date of publication and mention of the grant of the patent: **26.11.2008**
(21) Application number: 05702130.5
(22) Date of filing: 04.02.2005
(51) Int. Cl.: F16H 25/22

(54) **A BALLSCREW**
KUGELSPINDEL
VIS A BILLES

(30) Priority: 06.02.2004 GB 0402659
(43) Date of publication of application: 08.11.2006
(73) Proprietor: Thomson IBL Company, Roundswell Business Park Barnstaple Devon EX31 3UD (GB)
(72) Inventor: WALTON, Dennis Frederick, Barnstaple, North Devon EX33 4BA (GB)
(74) Representative: Crouch, David John
(86) International application number: PCT/GB2005/000396
(87) International publication number: WO 2005/075855

(56) References cited:
- EP-A- 0 257 249
- US-A- 4 186 621
- US-A1- 2001 000 051
- US-B1- 6 397 697

## Description

The present invention relates to a ballscrew comprising a first part in the form of a screwshaft and a second part in the form of a ballnut, an outer surface of the screwshaft and an inner surface of the ballnut being formed with respective grooves lying on a helical path which winds around the central longitudinal axis of the screwshaft, there being a plurality of balls located between the grooves such that they roll along the grooves when there is relative axial rotation between the screwshaft and the ballnut.

US-A-4,186,621 discloses a ballscrew having a series of isolated grooves each having its ends connected by a recirculating slot defined by an insert in the ballnut.

In previously proposed constructions, the grooves extend for a multiplicity of turns between respective ends thereof. To enable the balls to be recirculated back along a groove after reaching one of the ends, a ball transfer insert is located in an appropriately formed pocket or recess in either the screwshaft or the ballnut. The ball transfer insert is formed with a bore passing through it. The bore connects that one of the ends of the groove to its other end, so that the bore together with the groove forms a closed loop path having several turns in the helical part thereof.

A disadvantage of such a construction is the complexity of its manufacture, the need for precision engineering as regards the fit of the insert into the pocket or recess, and the need for space to accommodate the insert reducing the capacity available for the load bearing balls.

The present invention seeks to provide a remedy.

According to the present invention, there is provided a ballscrew having the construction as set out in the opening paragraph of the present specification, and at least one ball groove in the screwshaft which extends for the greater part of, but is less than, a full turn, and has its ends connected by a recirculating slot to enable recirculation of the balls around the ball groove, in which the recirculating slot is defined by a groove which is open at the surface of the screwshaft and which is deeper than the said at least one ball groove which, together with the said at least one groove the ends of which it connects, forms a closed loop, whereby the balls in that groove travel around it and are recirculated back into it via the recirculating slot as relative rotation between the said two parts causes relative axial linear movement therebetween, and in which the portion which defines the recirculating slot is made integrally with the portion which defines the groove, the ends of which are connected by the slot.

This improves the ease of recirculation of the balls. Also, it facilitates easier manufacture of the ballscrew, and means that the transfer device for the balls is integrally made with the part which has it.

Such a construction of ballscrew has a higher load carrying capacity, owing to the more compact overall envelope of the construction, as well as having a higher load carrying capacity owing to its ability to use larger diameter ball bearings. It can also be made more compact owing to the absence of any transfer insert pocket or recess. Furthermore, a higher level of mechanical integrity can be achieved owing to the reduced number of parts which constitute the ballscrew.

Preferably, the pitch of the helical path is less than twice the width of the grooves or the wider of the grooves if they are of unequal width. This provides a higher density of load bearing balls, increasing the load which can be borne by the ballscrew for a given size thereof.

It is desirable for the groove which is closed by the recirculating slot to be able to accommodate everywhere along its length more than half of each load bearing ball. This facilitates retraction of each ball into the slot when it crosses over the thread of the groove in the other of the said first and second parts.

There may be a plurality of grooves on one of the said two parts each extending around the said axis by an amount which is the greater part of but which is less than a full turn, and each having its ends connected by a deeper groove defining a recirculating slot, the grooves of the said plurality being located side by side as a series extending along the said axis such that all of the grooves of the said plurality lie on the said helical path. This provides an enhanced stability of the ballscrew.

The slots may be equiangularly spaced around the said axis, viewing the ballscrew along that axis. This affords an even distribution of load capacity around the ballscrew.

An example of a ballscrew made in accordance with the present invention will now be described with reference to the accompanied drawing in which:
- Figure 1: shows part of a ballscrew, in part-axial section, embodying the present invention;
- Figure 2: shows a diagrammatic cross-sectional view of the ballscrew shown in Figure 1;
- Figure 3: shows on a larger scale a diagrammatic axial sectional view of parts of a ballscrew substantially as shown in Figures 1 and 2;
- Figure 4: shows diagrammatically the grooves of the ballscrew shown in Figures 1 to 3, in cross-section; and
- Figure 5: shows an axial sectional view of a ballnut made in accordance with an alternative construction of ballscrew embodying the present invention.

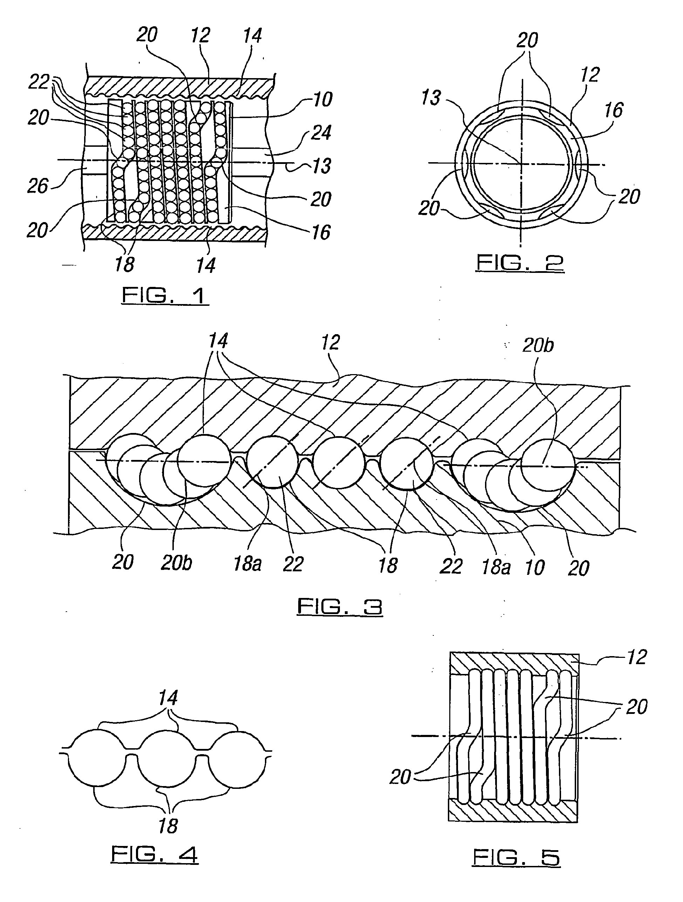

The ballscrew shown in Figures 1 and 2 comprises a screwshaft 10 and a ballnut 12, these two parts having a longitudinal axis 13 in common. The ballnut 12 is formed on its inside surface with a helical groove 14 having a uniform pitch and width.

The screwshaft 10 comprises a generally cylindrical block around the outside cylindrical surface 16 of which are formed a series of grooves 18. Each of these grooves 18 follows the same helical path as that of the groove 14 in the ballnut 12. Each of these grooves 18 extends around the common longitudinal axis 13 by an amount which is the greater part of but which is less than a full turn. The greater part is preferably in the range from 0.85 to 0.95 of a full turn (equivalent to an angle of rotation about the common longitudinal axis in the range from 1.7Π radians to 1.9Π radians, or in the range from 306° to 342°) and is more preferably about 0.92 of a full turn (equivalent to an angle of rotation about the common longitudinal axis of about 1.84Π radians or about 331°). The ends of each such groove are connected to one another by an integral ball transfer or recirculating slot 20. The recirculating slot 20 is constituted by a generally gently curving s-shaped groove which is deeper than the groove 14, and together with the latter forms a closed loop. The closed loop defines a passageway which is everywhere open around the outside of the screwshaft 10. This facilitates creation of the transfer means in the form of the portion which defines the recirculating slot integrally with the rest of the screwshaft 10. A multiplicity of ball bearings 22, all of identical size to one another and all being spherical, fill each closed loop, between each groove 18 or each slot 20, and the groove 14. The helical path defined by the groove 14 in the ballnut 12 has a pitch which is less than twice the width of one of the grooves 18. In fact the pitch is about 1.1 times the width of one of the grooves 18, so that the width of a groove is about 90% of the pitch. In cross-section, the side walls of each groove 18 extend along lines perpendicular to the axis 13, to a level beyond that of the centre of each ball 22 in a direction away from the axis 13. Immediately successive grooves 18 follow immediately successive turns of the helical path defined by the groove 14 respectively.

The screwshaft 10 is provided with plain straight circularly cross-sectioned shaft extensions 24 and 26 to facilitate coupling of other parts to the screwshaft

As is shown in Figure 2, viewing the ballscrew along the axis 13 thereof, the recirculating slots 20 are uniformly spaced around the axis 13 of the ballscrew 10

Figure 3 shows diagrammatically how each slot 20 is deeper than each groove 18. It also shows that each groove 18 everywhere accommodates more than half of each ball, so that its depth is more than the radius of each ball 22. Correspondingly, the groove 14 everywhere accommodates less than half of each ball, so that its depth is less than that of each groove 18, as is its width. Indeed, the depth of each groove 18 is less than the radius of each ball 22.

The lines 18a shown in Figure 3 indicate the contact points for each ball 22 in a groove 18, the positions where these lines meet the screwshaft 10 and the ballnut 12 being the points of contact between the associated ball 22 and the screwshaft 10 and between the associated ball 22 and the ballnut 12. These lines 18a are on a slant relative to the axis 13. The contact-defining lines change direction at the slots 20, and become parallel to the axis 13, to enable deflection of each ball 22 into an associated slot 20. The fact that each groove 18 has side walls which extend to a level beyond the centre of each ball 22 in a direction away from the axis 13 ensures that there is enough of the side wall to accommodate a full contact patch or contact ellipse between the ball and the groove side wall to facilitate deflection.

The screwshaft illustrated in Figures 1 to 4 may be prepared for use, for example, with the shafts 24 and 26 located in respective rotary bearings and coupled to be driven by a rotary motor, and with the ballnut 12 coupled to a member which is required to be moved linearly along the axis 13 when the shafts 24 and 26 are rotated.

When the shafts 24 and 26 are rotated, the screwshaft 10 is also rotated and the balls 22 are rolled between the groove 14 and the grooves 18. They therefore roll continuously around the helical groove 14. They also roll around each groove 18, and when a ball reaches the end of a groove 18, it is urged and deflected by a side wall of the associated end of a slot 20 and by a portion of the ballnut 12 which is between two successive turns of the groove 18 into the rest of the slot 20, where it is no longer under stress, that is to say it is off load. Continued rolling of further balls behind it ensure that it is urged along the slot and is recirculated back into the other end of the groove 18. The fact that each groove 18 accommodates more than half of each ball facilitates this feed of the ball through the slot 20, and reduces the likelihood of a ball being jammed between one side of the groove 14 and an opposing side of one of the grooves 18.

The fact that the slots 20 are equiangularly spaced around the axis 13 ensures a uniformly distributed load capacity around the ballscrew.

In the variant shown in Figure 5, the recirculating slots 20 are formed in the ballnut 12 which surrounds a screwshaft (not shown so as not to obscure the slots 20) which is longer than the nut 20 and which has a single helical groove following the same helical path as the individual grooves in the ballnut 20. In this case, the individual grooves in the ballnut 20 are deeper than the groove in the screwshaft, the groove and slots in the ballnut 12 of this variation corresponding in every way in their construction to the grooves 18 and slots 20 in the screwshaft 10 of the embodiment shown in Figures 1 to 4.

## Claims

1. A ballscrew comprising a first part in the form of a screwshaft (10) and a second part in the form of a ballnut (12), an outer surface of the screwshaft (10) and an inner surface of the ballnut (12) being formed with respective grooves (18 and 14) lying on a helical path which winds around the central longitudinal axis of the screwshaft (10), there being a plurality of balls (22) located between the grooves (14 and 18) such that they roll along the grooves when there is relative axial rotation between the screwshaft (10) and the ballnut (12), **characterized in that** there is at least one ball groove (18) in the screwshaft which extends for the greater part of, but is less than, a full turn, and has its ends connected by a recirculating slot (20) to enable recirculation of the balls (22) around the ball groove (18), and that the recirculating slot (20) is defined by a groove (20) which is open at the surface of the screwshaft (10) and which is deeper than the said at least one ball groove (18) which deeper groove (20), together with the said at least one groove (18) the ends of which it connects, forms a closed loop, whereby the balls (22) **in that** groove (18) travel around it and are recirculated back into it via the recirculating slot (20) as relative rotation between the said two parts causes relative axial linear movement there between, and that the portion which defines the recirculating slot (20) is made integrally with the portion which defines the groove (18), the ends of which are connected by the recirculating slot (20).

2. A ballscrew according to claim 1, **characterized in that** the pitch of the helical path is less than twice the width of the grooves or the wider of the grooves (14 and 18) if they are of unequal width.

3. A ballscrew according to claim 1 or claim 2, **characterized in that** the groove (18) which is closed by the recirculating slot (20) is able to accommodate everywhere along its length more than half of each load bearing ball (22).

4. A ballscrew according to any preceding claim, **characterized in that** there are a plurality of grooves (18) on one of the said two parts each extending around the said axis by an amount which is the greater part of but which is less than a full turn, each having its ends connected by a deeper groove defining a recirculating slot (20), the grooves (18) of the said plurality being located side by side as a series extending along the said axis such that all of the grooves (18) of the said plurality lie on the said helical path.

5. A ballscrew according to claim 4, **characterized in that** the slots (20) are equiangularly spaced around the said axis, viewing the ballscrew along that axis.

## Patentansprüche

1. Kugelumlaufspindel, die einen ersten Teil in Form eines Schraubenschafts (10) und einen zweiten Teil in Form einer Kugelmutter (12) umfasst, wobei eine äußere Oberfläche des Schraubenschafts (10) und eine innere Oberfläche der Kugelmutter (12) mit jeweiligen Nuten (18 und 14) ausgebildet sind, die auf einem schraubenlinienförmigen Weg liegen, der sich um die mittige Längsachse des Schraubenschafts (10) windet, wobei sich zwischen den Nuten (14 und 18) mehrere Kugeln (22) befinden, derart, dass sie längs der Nuten rollen, wenn zwischen dem Schraubenschaft (10) und der Kugelmutter (12) eine relative axiale Drehung vorhanden ist, **dadurch gekennzeichnet, dass** wenigstens eine Kugelnut (18) in dem Schraubenschaft vorhanden ist, die sich über den größeren Teil einer vollständigen Windung, jedoch nicht ganz über diese erstreckt und deren Enden durch einen Rückführungsschlitz (20) verbunden sind, um die Rückführung der Kugeln (22) um die Kugelnut (18) zu ermöglichen, und dass der Rückführungsschlitz (20) durch eine Nut (20) definiert ist, die an der Oberfläche des Schraubenschafts (10) offen ist und tiefer als die wenigstens eine Kugelnut (18) ist, wobei die tiefere Nut (20) zusammen mit der wenigstens einen Nut (18), deren Enden sie verbindet, eine geschlossene Schleife bildet, wodurch sich die Kugeln (22) in dieser Nut (18) um sie bewegen und durch den Rückführungsschlitz (20) in sie zurückgeführt werden, wenn eine relative Drehung zwischen den beiden Teilen eine relative axiale geradlinige Bewegung zwischen ihnen hervorruft, und dass der Abschnitt, der den Rückführungsschlitz (20) definiert, mit dem Abschnitt, der die Nut (18) definiert, deren Enden durch den Rückführungsschlitz (20) verbunden sind, einteilig ausgebildet ist.

2. Kugelumlaufspindel nach Anspruch 1, **dadurch gekennzeichnet, dass** die Steigung des schraubenlinienförmigen Wegs kleiner als die doppelte Breite der Nuten oder, falls diese ungleiche Breiten haben, breiter als die Nuten (14 und 18) ist.

3. Kugelumlaufspindel nach Anspruch 1 oder Anspruch 2, **dadurch gekennzeichnet, dass** die Nut (18), die durch den Rückführungsschlitz (20) geschlossen ist, überall auf ihrer Länge mehr als die Hälfte jeder lasttragenden Kugel (22) aufnehmen kann.

4. Kugelumlaufspindel nach einem vorhergehenden Anspruch, **dadurch gekennzeichnet, dass** an einem der zwei Teile mehrere Nuten (18) vorhanden sind, die sich um die Achse um einen Betrag erstrecken, der den größeren Teil einer vollständigen Windung, jedoch weniger als diese ausmacht, wobei von jeder dieser Nuten die Enden durch eine tiefere Nut verbunden sind, die einen Rückführungsschlitz (20) definiert, wobei sich die Nuten (18) dieser Mehrzahl nebeneinander in einer Reihe längs der Achse befinden, so dass alle Nuten (18) der Mehrzahl auf demselben schraubenlinienförmigen Weg liegen.

5. Kugelumlaufspindel nach Anspruch 4, **dadurch gekennzeichnet, dass** bei Betrachtung der Kugelumlaufspindel in Richtung ihrer Achse die Schlitze (20) im gleichen Winkelabstand um die Achse verteilt sind.

## Revendications

1. Vis à billes comprenant une première partie se présentant sous la forme d'un arbre de vis (10), et une deuxième partie, se présentant sous la forme d'un écrou à billes (12), une surface extérieure de l'arbre de vis (10) et une surface intérieure de l'écrou à billes (12) étant formées avec des gorges (18 et 14) respectives, situées sur un chemin hélicoïdal, s'enroulant autour de l'axe longitudinal central de l'arbre de vis (10), une pluralité de billes (22) étant situées entres les gorges (14 et 18) de manière qu'elles roulent le long des gorges lorsqu'une rotation axiale relative se produit entre l'arbre de vis (10) et l'écrou à billes (12), **caractérisée en ce qu'**il y a au moins une gorge à billes (18) dans l'arbre de vis, qui s'étend sur la plus grande partie d'un tour de rotation complet mais de manière inférieure à un tour de rotation complet, et a ses extrémités reliées par une fente de recirculation (20), de manière à permettre une recirculation des billes (22) autour de la gorge à billes (18), et **en ce que** la fente de recirculation (20) est définie par une gorge (20), ouverte à la surface de l'arbre de vis (10) et plus profonde que ladite au moins une gorge à billes (18), ladite gorge (20) plus profonde, conjointement avec ladite au moins une gorge (18) dont elle relie les extrémités, forme une boucle fermée, de manière que les billes (22) se trouvant dans cette gorge (18) se déplacent autour d'elle et soient ramenées en elle par recirculation, via la fente de recirculation (20), étant donné que la rotation relative se produisant entre lesdites deux parties provoque un déplacement relatif axial entre elles, et **en ce que** la portion qui définit la fente de recirculation (20) est réalisée d'une seule pièce avec la portion qui définit la gorge (18), dont les extrémités sont reliées par la fente de recirculation (20).

2. Vis à billes selon la revendication 1, **caractérisée en ce que** le pas du chemin hélicoïdal est inférieur au double de la largeur des gorges, ou de la plus large des gorges (14 et 18), si elles sont de largeur inégale.

3. Vis à billes selon la revendication 1 ou la revendication 2, **caractérisée en ce que** la gorge (18) qui est fermée par la fente de recirculation (20), est en mesure de loger, en un emplacement quelconque le long de sa longueur, plus de la moitié de chaque bille porteuse de charge (22).

4. Vis à billes selon l'une quelconque des revendications précédentes, **caractérisée en ce qu'**il y a une pluralité de gorges (18), sur l'une desdites deux parties s'étendant chacune autour dudit axe d'une quantité constituant la plus grande part d'un tour de rotation complet, mais inférieure à un tour complet, ayant chacune leurs extrémités reliées par une gorge plus profonde définissant une fente de recirculation (20), les gorges (18) de ladite pluralité étant situées côte-à-côte, en séries s'étendant le long dudit axe, de manière que la totalité des gorges (18) de ladite pluralité soient situées sur ledit chemin hélicoïdal.

5. Vis à billes selon la revendication 4, **caractérisée en ce que** les fentes (20) sont espacées de manière équidistante autour dudit axe, en observant la vis à billes le long de cet axe.
